(19) Europäisches Patentamt
European Patent Office
Office européen des brevets

(11) **EP 4 741 867 A2**

(12) **EUROPEAN PATENT APPLICATION**

(43) Date of publication:
**13.05.2026 Bulletin 2026/20**

(21) Application number: **26168021.9**

(22) Date of filing: **06.01.2023**

(51) International Patent Classification (IPC):
***G01S 5/02*** *(2010.01)*

(52) Cooperative Patent Classification (CPC):
**G01S 5/0236; H04L 5/0048; H04W 4/02**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.01.2022 CN 202210015838**

(62) Document number(s) of the earlier application(s) in
accordance with Art. 76 EPC:
**23737420.2 / 4 437 781**

(71) Applicant: **Samsung Electronics Co., Ltd.
Suwon-si, Gyeonggi-do 16677 (KR)**

(72) Inventors:
• **LI, Pengru
Beijing, 100028 (CN)**

• **XIONG, Qi
Beijing, 100028 (CN)**
• **SUN, Feifei
Beijing, 100028 (CN)**

(74) Representative: **Gulde & Partner
Patent- und Rechtsanwaltskanzlei mbB
Berliner Freiheit 2
10785 Berlin (DE)**

Remarks:
This application was filed on 26.03.2026 as a
divisional application to the application mentioned
under INID code 62.

(54) **POSITIONING SIGNAL MEASURING METHOD AND DEVICE**

(57) The disclosure relates to a fifth generation (5G) or sixth generation (6G) communication system for supporting a higher data transmission rate. The application provides a method performed by a user equipment, UE, in a wireless communication system, the method comprising identifying a time duration of an available positioning reference signal, PRS, resource; and performing a PRS measurement within a measurement period based on the time duration of the available PRS resource, wherein a PRS resource for the PRS measurement is unmuted and does not overlap with at least one of other signals or channels of higher priority.

[Fig. 4]

EP 4 741 867 A2

## Description

[Technical Field]

The invention relates to a positioning signal measuring method and device in a wireless communication system.

[Background Art]

Fifth generation (5G) mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement sixth generation (6G) mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive multiple-input multiple-output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BandWidth Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, New Radio (NR) User Equipment (UE) Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step random access channel (RACH) for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and Artificial Intelligence (AI) from the design stage and internalizing end-to-end AI support functions, and next-generation distributed computing technology for implementing services at levels of complexity exceeding the limit of UE operation capability by utilizing ultra-high-performance communication and computing resources.

In order to meet the increasing demand for wireless data communication services since the deployment of 4G communication systems, efforts have been made to develop improved 5G or quasi-5G communication systems. Therefore, 5G or quasi-5G communication system is also called "super 4G network" or "post-LTE system".

The 5G communication system is implemented in a higher frequency (millimeter, mmWave) band, for example, a 60GHz band, to achieve a higher data rate. In order to reduce the propagation loss of radio waves and increase the transmission distance, beamforming, large-scale multiple-input multiple-output (MIMO), full-dimensional MIMO(FD-MIMO), array antenna, analog beamforming and large-scale antenna technologies are discussed in 5G communication system.

In addition, in 5G communication system, based on advanced small cell, cloud radio access network (RAN), ultra dense network, device-to-device (D2D) communication, wireless backhaul, mobile network, cooperative communication, cooperative multipoint (CoMP), receiver interference cancellation, etc., the development of system network improvement is underway.

In 5G systems, advanced coding modulation (ACM), such as hybrid FSK and QAM modulation (FQAM) and sliding window superposition coding (SWSC), and advanced access technologies, such as filter bank multicarrier (FBMC), nonorthogonal multiple access (NOMA) and sparse code multiple access (SCMA) have been developed.

[Disclosure of Invention]

[Solution to Problem]

The present invention is directed to subject matter as defined in the claims. This disclosure relates to wireless communication networks, and more particularly to a terminal and a communication method thereof in a wireless communication system.

In aspect of the invention, there is provided a method performed by the user equipment UE, wherein determining the signal for measurement according to the received configuration information comprises: calculating a first time, wherein the first time comprises at least one of: 1) the duration K of positioning reference signal symbol; 2) the duration of available positioning reference signals; 3) the measurement period for measuring the positioning reference signal.

[Advantageous Effects of Invention]

Aspects of the disclosure are to address at least the above-mentioned problems and/or disadvantages and to provide at least the advantages described below. Accordingly, an aspect of the disclosure is to provide efficient communication methods in a wireless communication system.

[Brief Description of Drawings]

The above and other aspects, features, and advantages of certain embodiments of the disclosure will be more apparent from the following description taken in conjunction with the accompanying drawings, in which:

FIG.1 illustrates a schematic diagram of an example wireless network 100 according to various embodiments of the present disclosure;
Fig. 2A illustrates schematic diagrams of example wireless transmission and reception paths according to the present disclosure;
FIG. 2B illustrates schematic diagrams of example wireless transmission and reception paths according to the present disclosure;
FIG.3A illustrates a schematic diagram of an example user equipment (UE) 116 according to the present disclosure;
FIG.3B illustrates a schematic diagram of an example gNB 102 according to the present disclosure;
FIG. 4 illustrates a schematic diagram showing transmission of DL PRS and on-demand PRS;
FIG. 5 illustrates various hardware components of a user equipment, according to the embodiments as disclosed herein; and
FIG. 6 illustrates various hardware components of a base station according to the embodiments as disclosed herein;

Throughout the drawings, it should be noted that like reference numbers are used to depict the same or similar elements, features, and structures.

[Best Mode for Carrying out the Invention]

Aspects of the disclosure are to address at least the above-mentioned problems and/or disadvantages and to provide at least the advantages described below. Accordingly, an aspect of the disclosure is to provide a terminal and a communication method thereof in a wireless communication system.

According to one aspect of the invention, there is provided a method performed by a user equipment (UE), comprising: receiving configuration information of a signal for measurement; determining the signal for measurement according to the received configuration information; and measuring the determined signal for measurement.

In another aspect of the invention, there is provided a method performed by the user equipment UE, wherein determining the signal for measurement according to the received configuration information comprises: calculating a first time, wherein the first time comprises at least one of: 1) the duration K of positioning reference signal symbol; 2) the duration of available positioning reference signals; 3) the measurement period for measuring the positioning reference signal.

In another aspect of the invention, there is provided a method performed by the user equipment UE, wherein calculating the first time comprises a combination of one or more of the followings: 1) when the measurement gap of the positioning reference signal is not configured or activated and/or when other positioning reference signal measurement windows are configured or activated, the first time is calculated with UE symbol level buffering capability, wherein the first time is calculated according to the slot set of the numerology of the positioning reference signal of a serving cell in the window in the positioning frequency layer and the minimum gap of the first resource with pre-configuration or high priority in the slot corresponding to an integer number of symbols; 2) when the measurement gap of the positioning reference signal is not configured or activated and/or when other positioning reference signal measurement windows are configured or activated, the first time is calculated with UE slot level buffering capability, wherein the first time is calculated according to the number of elements of the slot set of the numerology of the positioning reference signal of a serving cell in the window in the positioning frequency layer and the numerology of the positioning reference signal; 3) when no measurement window of the positioning reference signal is configured or activated, the first time is calculated with UE symbol level buffering capability, wherein the first time is calculated according to the slot set of the numerology of the positioning reference signal of a serving cell corresponding to M first resources configured in the positioning frequency layer, and the minimum gap of M first resource with pre-configuration or high priority starting from the first reference point in the slot corresponding to the integer number of symbols; 4) when no measurement window of the positioning reference signal is configured or activated, the first time is calculated according to the slot level storage capacity of the UE, wherein the first time is calculated according to the number of elements of the slot set of the numerology of the positioning reference signal of a serving cell corresponding to M first resources starting from the first reference point configured in the positioning frequency layer and the numerology of the positioning reference signal; wherein the integer number of symbols are determined based on the numerology of the positioning reference signal of a serving cell.

In another aspect of the invention, there is provided a method performed by the user equipment UE, wherein the first resource with high priority is a positioning reference signal resource determined by the user equipment UE to be measured and/or a positioning reference signal that does not collide/conflict with other downlink signals.

In another aspect of the invention, there is provided a method performed by the user equipment UE, wherein the first reference point comprises at least one of the followings: the system number 0 (SFN0) slot 0; the measurement instance of the positioning reference signal; and the starting position of the pre-configured and/or indicated positioning reference signal measurement.

In another aspect of the invention, there is provided a method performed by the user equipment UE, wherein the first resource comprises at least one of the followings: the positioning reference signal symbol; the positioning reference signal resource; the instance of the positioning reference signal resource; the resource set of the positioning reference signal; and the measurement instance of the positioning reference signal.

In another aspect of the invention, there is provided a method performed by the user equipment UE, wherein the M first resources are determined by the user equipment UE in a default way and/or by receiving an indication from the base station.

In another aspect of the invention, there is provided a method performed by the user equipment UE, wherein the first resource with high priority is within the positioning reference signal processing window, and is determined by the user equipment UE as a positioning reference signal resource that is expected to be measured and/or a positioning reference signal that does not collide/conflict with other downlink signals.

In another aspect of the invention, there is provided a method performed by the user equipment (UE), wherein the determining the signal for measurement according to the received configuration information comprises: calculating the measurement period for measuring the positioning reference signal.

In another aspect of the invention, there is provided a method performed by the user equipment UE, wherein the measurement period for measuring the positioning reference signal is calculated according to the combination of one or more of the followings: 1) the duration of available positioning reference signal; 2) the repetition period of the measurement gap; 3) when more than one positioning reference signal period are configured, it is calculated according to the positioning reference signal and the on-demand positioning reference signal.

In another aspect of the invention, there is provided a method performed by the user equipment UE, wherein calculating the measurement period for measuring the positioning reference signal according to the duration of the available positioning reference signal comprises a combination of one or more of the followings: 1) when the measurement gap of the positioning reference signal is not configured or activated, and/or when other positioning reference signal measurement windows are configured or activated, only the first resource which is unmuted, fully or partially overlaps with the positioning reference signal processing window, and is pre-configured or has high priority is calculated; and 2) when other positioning reference signal measurement windows are not configured or activated, only the first resource that is unmuted and M pre-configured or high-priority first resources are calculated.

In another aspect of the invention, there is provided a method performed by the user equipment UE, wherein calculating the measurement period for measuring the positioning reference signal according to the measurement gap repetition period comprises a combination of one or more of the followings: 1) it is configured according to the repetition period of the positioning reference signal processing window; 2) the measurement period for measuring the positioning reference signal is calculated according to the currently configured gap mode configuration table through the mode index number of the virtual measurement gap; 3) the measurement period for measuring the positioning reference signal is set by default and/or the way indicated by the base station.

In another aspect of the invention, there is provided a method performed by the user equipment UE, wherein setting the measurement period for measuring the positioning reference signal by default and/or the way indicated by the base station comprises setting the measurement gap repetition period as a combination of one or more of the followings: 1) the time gap from the start time of the first reference point to the start time of the next first reference point; 2) the time gap from the start time of the first reference point to the end time of the last one of M first resources; 3) the time gap from the start time of the first one of M first resources to the start time of the next first reference point; and 4) the time gap from the start time of the first one of M first resources to the end time of the last first resource,

wherein M first resources are determined by the user equipment UE by default and/or by receiving an indication from the base station.

In another aspect of the invention, there is provided a method performed by the user equipment UE, wherein when more than one positioning reference signal period are configured, calculating the measurement period for measuring the positioning reference signal according to the positioning reference signal and the on-demand positioning reference signal comprises a combination of one or more of the followings: 1) the measurement period for measuring the positioning reference signal is calculated according to a smaller signal transmission period among the positioning reference signal period and the on-demand positioning reference signal period; 2) the measurement period for measuring the positioning reference signal is calculated according to the on-demand positioning reference signal period; and 3) the measurement period for measuring the positioning reference signal is calculated according to the minimum common multiple of the positioning reference signal period and/or the on-demand positioning reference signal period and/or the measurement gap and/or the positioning reference signal processing window period.

In another aspect of the invention, there is provided a method performed by the user equipment UE, further comprising: performing a subsequent reception of the positioning reference signal, after receiving the end time indication of all or part of the positioning reference signals within the measurement period for measuring the positioning reference signal and/or outside the measurement period for measuring the positioning reference signal.

In another aspect of the invention, there is provided a method performed by the user equipment UE, wherein performing the subsequent reception of the positioning reference signal comprises a combination of one or more of the followings: 1) fallback to the previous configuration of the positioning reference signal to continue receiving or measuring the positioning reference signal at a specific position; 2) stopping receiving the positioning reference signal, and receiving a reconfigured and/or reactivated positioning reference signal from the base station when the user equipment UE requests again or the positioning management entity LMF initiates positioning measurement.

In another aspect of the invention, there is provided a method performed by the user equipment UE, wherein the configuration information of the received signal comprises: obtaining and/or determining calibration information, wherein the calibration information comprises a combination of one or more of the followings: the time difference associated with the positioning reference signal/sounding reference signal SRS resources/resource set IDs of two or more transmitting and receiving points TRPs; the time difference associated with the positioning reference signal/sounding reference signal SRS resources/resource set IDs of two or more CELL IDs; the angle difference associated with the positioning reference signal/sounding reference signal SRS resources/resource set IDs of two or more transmitting and receiving points TRPs; and the angle difference associated with the positioning reference signal/sounding reference signal SRS resources/resource set IDs of two or more CELL IDs..

In another aspect of the invention, there is provided a method performed by the user equipment UE, wherein obtaining and/or determining the calibration information comprises a combination of one or more of the followings: 1) obtaining the calibration information indication through a radio resource control RRC message and/or a MAC layer control element MAC CE message; 2) requesting the calibration information from the base station equipment, and then obtaining the calibration information indication through the radio resource control RRC message and/or the MAC layer control element MAC CE and/or a LTE positioning protocol LPP message.

In another aspect of the invention, there is provided a method performed by the user equipment UE, further comprising: triggering/expecting to receive the calibration information when the triggering condition for receiving the calibration information is met, wherein the triggering condition includes a combination of one or more of the followings: 1) detecting that the configured transmitting and receiving point TRP is the same as the transmitting and receiving point TRP of the positioning reference unit PRU for providing positioning calibration information indicated by the base station equipment; 2) detecting that the configured CELL ID is the same as the CELL ID of the positioning reference unit PRU used for providing positioning calibration information indicated by the base station equipment; 3) the received calibration status indication message is on.

In another aspect of the invention, there is provided a user equipment UE, comprising: a memory configured to store computer programs; and a processor configured to implement any of the methods described above.

[Mode For the Invention]

The following description with reference to the drawings is provided to facilitate a comprehensive understanding of various embodiments of the present disclosure defined by the claims and their equivalents. This description includes various specific details to facilitate understanding but should only be considered as exemplary. Therefore, those skilled in the art will recognize that various changes and modifications can be made to the various embodiments described herein without departing from the scope and spirit of the present disclosure. In addition, for the sake of clarity and conciseness, the description of well-known functions and structures may be omitted.

Terms and expressions used in the following specification and claims are not limited to their dictionary meanings, but are only used by the inventors to enable a clear and consistent understanding of the present disclosure. Therefore, it should be obvious to those skilled in the art that the following descriptions of various embodiments of the present disclosure are provided only for the purpose of illustration and not for the purpose of limiting the present disclosure as defined by the appended claims and their equivalents.

It should be understood that singular forms of "a", "an" and "the" include plural referents, unless the context clearly indicates otherwise. Thus, for example, reference to "a component surfaces" includes reference to one or more such surfaces.

The term "including" or "may include" refers to the existence of the corresponding disclosed functions, operations or components that can be used in various embodiments of the present disclosure, rather than limiting the existence of one or more additional functions, operations or features. In addition, the terms "including" or "having" can be interpreted to indicate certain features, numbers, steps, operations, constituent elements, components or combinations thereof, but should not be interpreted to exclude the possibility of the existence of one or more other features, numbers, steps, operations, constituent elements, components or combinations thereof.

The term "or" used in various embodiments of the present disclosure includes any listed terms and all combinations thereof. For example, "A or B" may include A, B, or both A and B.

Unless otherwise defined, all terms (including technical terms or scientific terms) used in this disclosure have the same meanings as understood by those skilled in the art as described in this disclosure. Common terms as defined in dictionaries are interpreted to have meanings consistent with the context in relevant technical fields, and should not be interpreted with idealized or overly formal meanings unless specifically defined as here.

The technical scheme of this embodiment can be applied to various communication systems, such as Global System for Mobile Communications (GSM) system, code division multiple access (CDMA) system, Wideband Code Division Multiple Access (WCDMA) system, general packet radio service (GPRS), long term evolution (LTE) system, LTE frequency division duplex (FDD) system, LTE time division duplex (TDD), universal mobile telecommunications system (UMTS), worldwide interoperability for microwave access (WiMAX) communication system, 5th generation (5G) system or new radio (NR), etc. In addition, the technical scheme of the embodiment of this application can be applied to future-oriented communication technology.

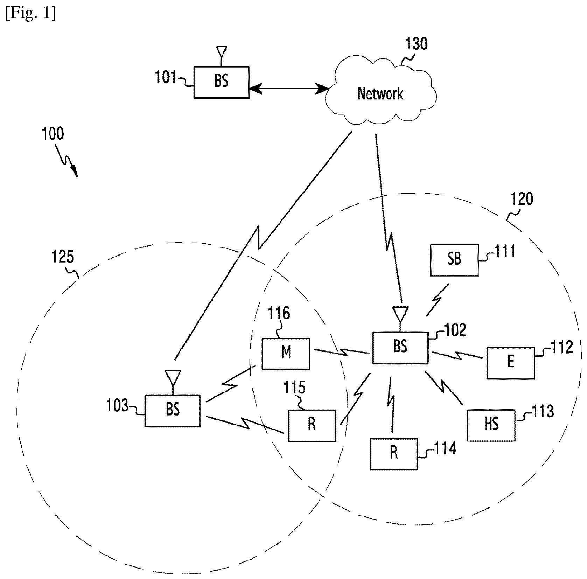

FIG.1 illustrates a schematic diagram of an example wireless network 100 according to various embodiments of the present disclosure.

The embodiment of the wireless network 100 shown in FIG. 1 is for illustration only. Other embodiments of the wireless network 100 can be used without departing from the scope of the present disclosure.

The wireless network 100 includes a gNodeB (gNB) 101, a gNB 102, and a gNB 103. gNB 101 communicates with gNB 102 and gNB 103. gNB 101 also communicates with at least one Internet Protocol (IP) network 130, such as the Internet, a private IP network, or other data networks.

Depending on a type of the network, other well-known terms such as "base station" or "access point" can be used instead of "gNodeB" or "gNB". For convenience, the terms "gNodeB" and "gNB" are used in this patent document to refer to network infrastructure components that provide wireless access for remote terminals. Other well-known terms such as "mobile station", "user station", "remote terminal", "wireless terminal" or "user apparatus" can be used instead of "user equipment" or "UE", depending on the type of the network. For convenience, the terms "user equipment" and "UE" are used in this patent document to refer to remote wireless devices that wirelessly access the gNB, no matter whether the UE is a mobile device (such as a mobile phone or a smart phone) or a fixed device (such as a desktop computer or a vending machine).

gNB 102 provides wireless broadband access to the network 130 for a first plurality of User Equipments (UEs) within a coverage area 120 of gNB 102. The first plurality of UEs include a UE 111, which may be located in a Small Business (SB); a UE 112, which may be located in an enterprise (E); a UE 113, which may be located in a WiFi Hotspot (HS); a UE 114, which may be located in a first residence (R); a UE 115, which may be located in a second residence (R); a UE 116, which may be a mobile device (M), such as a cellular phone, a wireless laptop computer, a wireless PDA, etc. GNB 103 provides wireless broadband access to network 130 for a second plurality of UEs within a coverage area 125 of gNB 103. The second plurality of UEs include a UE 115 and a UE 116. In some embodiments, one or more of gNBs 101-103 can communicate with each other and with UEs 111-116 using 5G, Long Term Evolution (LTE), LTE-A, WiMAX or other advanced wireless communication technologies.

The dashed lines show approximate ranges of the coverage areas 120 and 125, and the ranges are shown as approximate circles merely for illustration and explanation purposes. It should be clearly understood that the coverage areas associated with the gNBs, such as the coverage areas 120 and 125, may have other shapes, including irregular shapes, depending on configurations of the gNBs and changes in the radio environment associated with natural obstacles and manmade obstacles.

As will be described in more detail below, one or more of gNB 101, gNB 102, and gNB 103 include a 2D antenna array as described in embodiments of the present disclosure. In some embodiments, one or more of gNB 101, gNB 102, and gNB 103 support codebook designs and structures for systems with 2D antenna arrays.

Although FIG. 1 illustrates an example of the wireless network 100, various changes can be made to FIG. 1. The wireless network 100 can include any number of gNBs and any number of UEs in any suitable arrangement, for example. Furthermore, gNB 101 can directly communicate with any number of UEs and provide wireless broadband access to the network 130 for those UEs. Similarly, each gNB 102-103 can directly communicate with the network 130 and provide direct wireless broadband access to the network 130 for the UEs. In addition, gNB 101, 102 and/or 103 can provide access to other or additional external networks, such as external telephone networks or other types of data networks.

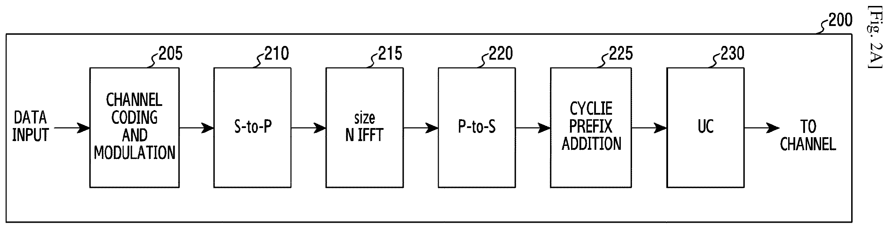

Fig. 2A illustrates schematic diagrams of example wireless transmission and reception paths according to the present disclosure.

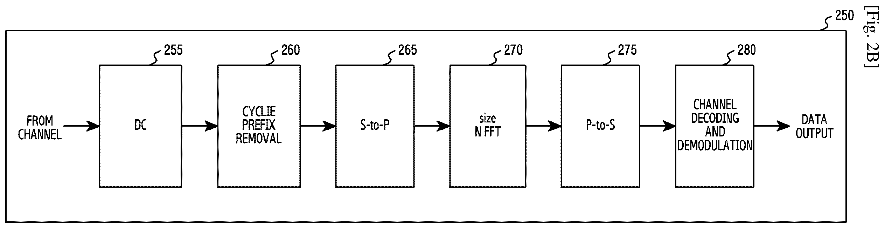

FIG. 2B illustrates schematic diagrams of example wireless transmission and reception paths according to the present disclosure.

In the following description, the transmission path 200 can be described as being implemented in a gNB, such as gNB 102, and the reception path 250 can be described as being implemented in a UE, such as UE 116. However, it should be understood that the reception path 250 can be implemented in a gNB and the transmission path 200 can be implemented in a UE. In some embodiments, the reception path 250 is configured to support codebook designs and structures for systems with 2D antenna arrays as described in embodiments of the present disclosure.

The transmission path 200 includes a channel coding and modulation block 205, a Serial-to-Parallel (S-to-P) block 210, a size N Inverse Fast Fourier Transform (IFFT) block 215, a Parallel-to-Serial (P-to-S) block 220, a cyclic prefix addition block 225, and an up-converter (UC) 230. The reception path 250 includes a down-converter (DC) 255, a cyclic prefix removal block 260, a Serial-to-Parallel (S-to-P) block 265, a size N Fast Fourier Transform (FFT) block 270, a Parallel-to-Serial (P-to-S) block 275, and a channel decoding and demodulation block 280.

In the transmission path 200, the channel coding and modulation block 205 receives a set of information bits, applies coding (such as Low Density Parity Check (LDPC) coding), and modulates the input bits (such as using Quadrature Phase Shift Keying (QPSK) or Quadrature Amplitude Modulation (QAM)) to generate a sequence of frequency-domain modulated symbols. The Serial-to-Parallel (S-to-P) block 210 converts (such as demultiplexes) serial modulated symbols into parallel data to generate N parallel symbol streams, where N is a size of the IFFT/FFT used in gNB 102 and UE 116. The size N IFFT block 215 performs IFFT operations on the N parallel symbol streams to generate a time-domain output signal. The Parallel-to-Serial block 220 converts (such as multiplexes) parallel time-domain output symbols from the Size N IFFT block 215 to generate a serial time-domain signal. The cyclic prefix addition block 225 inserts a cyclic prefix into the time-domain signal. The up-converter 230 modulates (such as up-converts) the output of the cyclic prefix addition block 225 to an RF frequency for transmission via a wireless channel. The signal can also be filtered at a baseband before switching to the RF frequency.

The RF signal transmitted from gNB 102 arrives at the UE 116 after passing through the wireless channel, and operations in reverse to those at gNB 102 are performed at the UE 116. The down-converter 255 down-converts the received signal to a baseband frequency, and the cyclic prefix removal block 260 removes the cyclic prefix to generate a serial time-domain baseband signal. The Serial-to-Parallel block 265 converts the time-domain baseband signal into a parallel time-domain signal. The Size N FFT block 270 performs an FFT algorithm to generate N parallel frequency-domain signals. The Parallel-to-Serial block 275 converts the parallel frequency-domain signal into a sequence of modulated data symbols. The channel decoding and demodulation block 280 demodulates and decodes the modulated symbols to recover the original input data stream.

Each of gNBs 101-103 may implement a transmission path 200 similar to that for transmitting to UEs 111-116 in the downlink, and may implement a reception path 250 similar to that for receiving from UEs 111-116 in the uplink. Similarly, each of UEs 111-116 may implement a transmission path 200 for transmitting to gNBs 101-103 in the uplink, and may implement a reception path 250 for receiving from gNBs 101-103 in the downlink.

Each of the components in FIGs. 2A and 2B can be implemented using only hardware, or using a combination of hardware and software/firmware. As a specific example, at least some of the components in FIGs. 2A and 2B may be implemented in software, while other components may be implemented in configurable hardware or a combination of software and configurable hardware. For example, the FFT block 270 and IFFT block 215 may be implemented as configurable software algorithms, in which the value of the size N may be modified according to the implementation.

Furthermore, although described as using FFT and IFFT, this is only illustrative and should not be interpreted as limiting the scope of the present disclosure. Other types of transforms can be used, such as Discrete Fourier transform (DFT) and Inverse Discrete Fourier Transform (IDFT) functions. It should be understood that for DFT and IDFT functions, the value of variable N may be any integer (such as 1, 2, 3, 4, etc.), while for FFT and IFFT functions, the value of variable N may be any integer which is a power of 2 (such as 1, 2, 4, 8, 16, etc.).

Although FIGs. 2A and 2B illustrate examples of wireless transmission and reception paths, various changes may be made to FIGs. 2A and 2B. For example, various components in FIGs. 2A and 2B can be combined, further subdivided or omitted, and additional components can be added according to specific requirements. Furthermore, FIGs. 2A and 2B are intended to illustrate examples of types of transmission and reception paths that can be used in a wireless network. Any other suitable architecture can be used to support wireless communication in a wireless network.

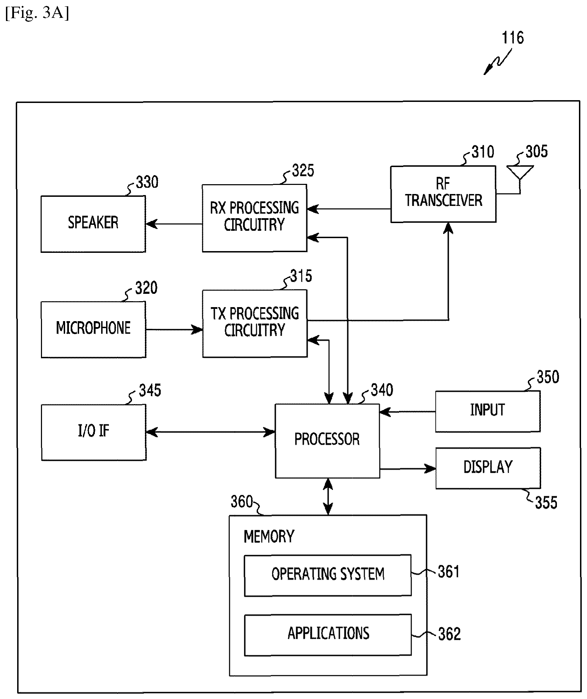

FIG.3A illustrates a schematic diagram of an UE 116 according to the present disclosure.

The embodiment of UE 116 shown in FIG. 3A is for illustration only, and UEs 111-115 of FIG. 1 can have the same or similar configuration. However, a UE has various configurations, and FIG. 3A does not limit the scope of the present disclosure to any specific implementation of the UE.

UE 116 includes an antenna 305, a radio frequency (RF) transceiver 310, a transmission (TX) processing circuit 315, a microphone 320, and a reception (RX) processing circuit 325. The UE 116 also includes a speaker 330, a processor/controller 340, an input/output (I/O) interface 345, an input device(s) 350, a display 355, and a memory 360. The memory 360 includes an operating system (OS) 361 and one or more applications 362. However, the components of the UE 116 are not limited thereto. For example, the UE 116 may include more or fewer components than those described above. In addition, the UE 116 corresponds to the UE of the FIG. 16.

The RF transceiver 310 receives an incoming RF signal transmitted by a gNB of the wireless network 100 from the antenna 305. The RF transceiver 310 down-converts the incoming RF signal to generate an intermediate frequency (IF) or baseband signal. The IF or baseband signal is transmitted to the RX processing circuit 325, where the RX processing circuit 325 generates a processed baseband signal by filtering, decoding and/or digitizing the baseband or IF signal. The RX processing circuit 325 transmits the processed baseband signal to speaker 330 (such as for voice data) or to processor/controller 340 for further processing (such as for web browsing data).

The TX processing circuit 315 receives analog or digital voice data from microphone 320 or other outgoing baseband data (such as network data, email or interactive video game data) from processor/controller 340. The TX processing circuit 315 encodes, multiplexes, and/or digitizes the outgoing baseband data to generate a processed baseband or IF signal. The RF transceiver 310 receives the outgoing processed baseband or IF signal from the TX processing circuit 315 and up-converts the baseband or IF signal into an RF signal transmitted via the antenna 305.

The processor/controller 340 can include one or more processors or other processing devices and execute an OS 361 stored in the memory 360 in order to control the overall operation of the UE 116. For example, the processor/controller 340 can control the reception of forward channel signals and the transmission of backward channel signals through the RF transceiver 310, the RX processing circuit 325 and the TX processing circuit 315 according to well-known principles. In some embodiments, the processor/controller 340 includes at least one microprocessor or microcontroller.

The processor/controller 340 is also capable of performing other processes and programs residing in the memory 360, such as operations for channel quality measurement and reporting for systems with 2D antenna arrays as described in embodiments of the present disclosure. The processor/controller 340 can move data into or out of the memory 360 as required by an execution process. In some embodiments, the processor/controller 340 is configured to execute the application 362 based on the OS 361 or in response to signals received from the gNB or the operator. The processor/controller 340 is also coupled to an I/O interface 345, where the I/O interface 345 provides the UE 116 with the ability to connect to other devices such as laptop computers and handheld computers. I/O interface 345 is a communication path between these accessories and the processor/controller 340.

The processor/controller 340 is also coupled to the input device(s) 350 and the display 355. An operator of the UE 116 can input data into the UE 116 using the input device(s) 350. The display 355 may be a liquid crystal display or other display capable of presenting text and/or at least limited graphics (such as from a website). The memory 360 is coupled to the processor/controller 340. A part of the memory 360 can include a random access memory (RAM), while another part of the memory 360 can include a flash memory or other read-only memory (ROM).

Although FIG. 3A illustrates an example of the UE 116, various changes can be made to FIG. 3A. For example, various components in FIG. 3A can be combined, further subdivided or omitted, and additional components can be added according to specific requirements. As a specific example, the processor/controller 340 can be divided into a plurality of processors, such as one or more central processing units (CPUs) and one or more graphics processing units (GPUs). Furthermore, although FIG. 3A illustrates that the UE 116 is configured as a mobile phone or a smart phone, UEs can be configured to operate as other types of mobile or fixed devices.

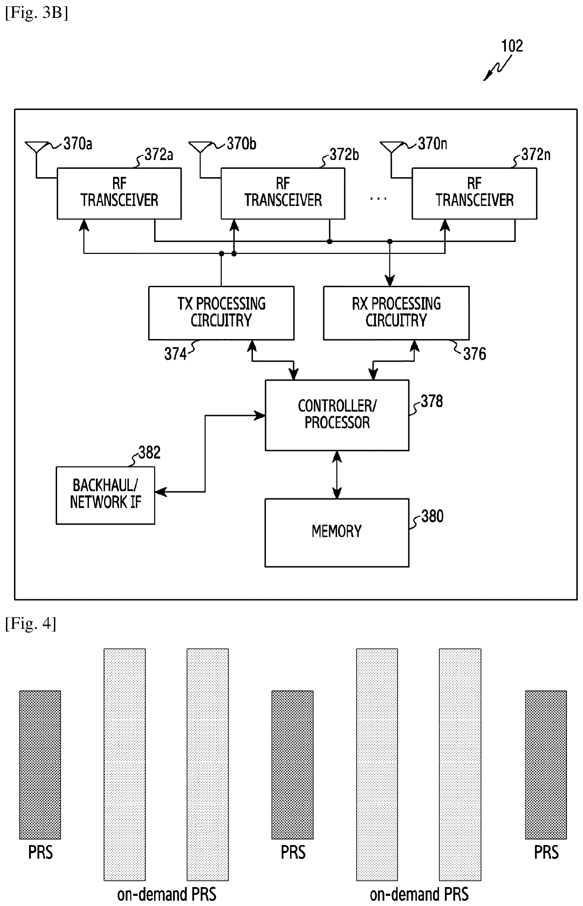

FIG.3B illustrates a schematic diagram of an example gNB 102 according to the present disclosure.

The embodiment of gNB 102 shown in FIG. 3B is for illustration only, and other gNBs of FIG. 1 can have the same or similar configuration. However, a gNB has various configurations, and FIG. 3B does not limit the scope of the present disclosure to any specific implementation of a gNB. It should be noted that gNB 101 and gNB 103 can include the same or similar structures as gNB 102.

As shown in FIG. 3B, gNB 102 includes a plurality of antennas 370a-370n, a plurality of RF transceivers 372a-372n, a transmission (TX) processing circuit 374, and a reception (RX) processing circuit 376. In certain embodiments, one or more of the plurality of antennas 370a-370n include a 2D antenna array. gNB 102 also includes a controller/processor 378, a memory 380, and a backhaul or network interface 382. However, the components of the BS 102 are not limited thereto. For example, the BS 102 may include more or fewer components than those described above. In addition, the BS 102 corresponds to the base station of the FIG.7.

RF transceivers 372a-372n receive an incoming RF signal from antennas 370a-370n, such as a signal transmitted by UEs or other gNBs. RF transceivers 372a-372n down-convert the incoming RF signal to generate an IF or baseband signal. The IF or baseband signal is transmitted to the RX processing circuit 376, where the RX processing circuit 376 generates a processed baseband signal by filtering, decoding and/or digitizing the baseband or IF signal. RX processing circuit 376 transmits the processed baseband signal to controller/processor 378 for further processing.

The TX processing circuit 374 receives analog or digital data (such as voice data, network data, email or interactive video game data) from the controller/processor 378. TX processing circuit 374 encodes, multiplexes and/or digitizes outgoing baseband data to generate a processed baseband or IF signal. RF transceivers 372a-372n receive the outgoing processed baseband or IF signal from TX processing circuit 374 and upconvert the baseband or IF signal into an RF signal transmitted via antennas 370a-370n.

The controller/processor 378 can include one or more processors or other processing devices that control the overall operation of gNB 102. For example, the controller/processor 378 can control the reception of forward channel signals and the transmission of backward channel signals through the RF transceivers 372a-372n, the RX processing circuit 376 and the TX processing circuit 374 according to well-known principles. The controller/processor 378 can also support additional functions, such as higher-level wireless communication functions. For example, the controller/processor 378 can perform a Blind Interference Sensing (BIS) process such as that performed through a BIS algorithm, and decode a received signal from which an interference signal is subtracted. A controller/processor 378 may support any of a variety of other functions in gNB 102. In some embodiments, the controller/processor 378 includes at least one microprocessor or microcontroller.

The controller/processor 378 is also capable of performing programs and other processes residing in the memory 380, such as a basic OS. The controller/processor 378 can also support channel quality measurement and reporting for systems with 2D antenna arrays as described in embodiments of the present disclosure. In some embodiments, the controller/processor 378 supports communication between entities such as web RTCs. The controller/processor 378 can move data into or out of the memory 380 as required by an execution process.

The controller/processor 378 is also coupled to the backhaul or network interface 382. The backhaul or network interface 382 allows gNB 102 to communicate with other devices or systems through a backhaul connection or through a network. The backhaul or network interface 382 can support communication over any suitable wired or wireless connection(s). For example, when gNB 102 is implemented as a part of a cellular communication system, such as a cellular communication system supporting 5G or new radio access technology or NR, LTE or LTE-A, the backhaul or network interface 382 can allow gNB 102 to communicate with other gNBs through wired or wireless backhaul connections. When gNB 102 is implemented as an access point, the backhaul or network interface 382 can allow gNB 102 to communicate with a larger network, such as the Internet, through a wired or wireless local area network or through a wired or wireless connection. The backhaul or network interface 382 includes any suitable structure that supports communication through a wired or wireless connection, such as an Ethernet or an RF transceiver.

The memory 380 is coupled to the controller/processor 378. A part of the memory 380 can include an RAM, while another part of the memory 380 can include a flash memory or other ROMs. In certain embodiments, a plurality of instructions, such as the BIS algorithm, are stored in the memory. The plurality of instructions are configured to cause the controller/processor 378 to execute the BIS process and decode the received signal after subtracting at least one interference signal determined by the BIS algorithm.

As will be described in more detail below, the transmission and reception paths of gNB 102 (implemented using RF transceivers 372a-372n, TX processing circuit 374 and/or RX processing circuit 376) support aggregated communication with FDD cells and TDD cells.

Although FIG. 3B illustrates an example of gNB 102, various changes may be made to FIG. 3B. For example, gNB 102 can include any number of each component shown in FIG. 3A. As a specific example, the access point can include many backhaul or network interfaces 382, and the controller/processor 378 can support routing functions to route data between different network addresses. As another specific example, although shown as including a single instance of the TX processing circuit 374 and a single instance of the RX processing circuit 376, gNB 102 can include multiple instances of each (such as one for each RF transceiver).

The time domain unit (also called time unit) in this invention can be: an OFDM symbol, an OFDM symbol group (composed of multiple OFDM symbols), a slot, a slot group (composed of multiple slots), a subframe, a subframe group (composed of multiple subframes), a system frame and a system frame group (composed of multiple system frames). The time unit can also be an absolute time unit, such as 1 millisecond, 1 second, etc. Furthermore, the time unit can also be a combination of various granularities, such as N1 slots plus N2 OFDM symbols.

The frequency domain unit in this invention can be: a subcarrier, a subcarrier group (composed of multiple subcarriers), a resource block (RB), which can also be called a physical resource block (PRB), a resource block group (composed of multiple RBs), a band part (BWP), a band part group (composed of multiple BWPs), a band/-carrier, a band group/carrier group. The frequency domain unit can also be an absolute frequency domain unit, such as 1 Hz, 1 kHz, etc. Furthermore, the frequency domain unit can also be a combination of various granularities, such as M1 PRBs plus M2 subcarriers.

Exemplary embodiments of the present disclosure are further described below with reference to the accompanying drawings.

The text and drawings are only provided as examples to assist readers in understanding the present disclosure. They are not intended and should not be construed to limit the scope of the present disclosure in any way. While certain embodiments and examples have been provided, it will be apparent to those skilled in the art based on the disclosure herein that the illustrated embodiments and examples can be modified without departing from the scope of the present disclosure.

Those skilled in the art can understand that the singular forms "a", "an", and "the" used here can also include plural forms unless specifically stated. It should be further understood that the word "comprising" used in the specification of this application means the presence of said features, integers, steps, operations, elements and/or components, but does not exclude the presence or addition of one or more other features, integers, steps, operations, elements, components and/or groups thereof. It should be understood that when an element is described as "connected" or "coupled" to another element, it may be directly connected or coupled to other elements, or there may be intervening elements. In addition, as used herein, the statements "connected" or "coupled" may include wireless connection or wireless coupling. As used herein, the phrase "and/or" includes all or any unit and all combinations of one or more associated listed items.

Those skilled in the art can understand that unless otherwise defined, all terms (including technical terms and scientific terms) used here have the same meaning as those commonly understood by ordinary technicians in the field to which this application belongs. It should also be understood that terms such as those defined in the general dictionary should be understood to have meanings consistent with those in the context of the prior art, and will not be interpreted with idealized or overly formal meanings unless specifically defined as here.

It can be understood by those skilled in the art that "terminal" and "terminal equipment" used here include not only the equipment including wireless signal receiver which is a wireless signal receiving equipment without capability of transmitting signals, but also the equipment including receiving and transmitting hardware which is capable of bidirectional communication on bidirectional communication link. Such devices may include: cellular or other communication devices with single-line display or multi-line display or cellular or other communication devices without multi-line display; PCS (Personal Communications Service), which can combine voice, data processing, fax and/or data communication capabilities; PDA(Personal Digital Assistant), which may include radio frequency receiver, pager, internet/intranet access, web browser, notepad, calendar and/or GPS(Global Positioning System) receiver; conventional laptops and/or palmtop computers or other devices having and/or including a radio frequency receiver. As used herein, "terminal" and "terminal equipment" can be portable, transportable, installed in the (aviation, maritime and/or land) transport, or suitable and/or configured to operate locally, and/or operate in any other place on the earth and/or space in a distributed manner. As used herein, "terminal" and "terminal equipment" can also be a communication terminal, an Internet terminal and a music/video playing terminal, such as PDA, MID (Mobile Internet Device) and/or a mobile phone with music/video playing functions, a smart TV, a set-top box and other devices.

The term "transmit" in the invention may be used interchangeably with "send", "report", "notify" and the like without departing from the scope of the invention.

The text and drawings are only provided as examples to assist readers in understanding the present disclosure. They are not intended and should not be construed to limit the scope of the present disclosure in any way. While certain embodiments and examples have been provided, it will be apparent to those skilled in the art based on the disclosure herein that the illustrated embodiments and examples can be modified without departing from the scope of the present disclosure.

A transmission link in the wireless communication system mainly includes: a downlink communication link from the 5G New Radio (NR) gNB to the User Equipment (UE), and an uplink communication link from the UE to the network.

A node for positioning measurement in the wireless communication system (e.g., a current wireless communication system) may include: a UE for initiating a positioning request message, a Location Management Function (LMF) for issuance of positioning auxiliary data and UE positioning, a gNB or a Transmission-Reception Point (TRP) for broadcasting positioning assistance data and for uplink positioning measurement, and a UE for downlink positioning measurement.

The positioning reference signal is measured according to the measurement period for the measuring, and the measurement result is reported to gNB/ LMF when certain conditions are met. The measurement period for the measuring is related to configuration parameters such as the duration of the positioning reference signal and the measurement gap repetition period (MGRP). When the measurement gap is not configured and/or there are multiple positioning reference signals, how to calculate the duration (K) of reference signal symbol and the measurement period of the positioning reference signal measurement is a problem to be solved. According to the embodiment of the invention, the measurement period of the positioning reference signal measurement has the same meaning as the measurement period for measuring the positioning reference signal, which is not beyond the scope of the invention.

In order to provide higher precision positioning service, the positioning error can be reduced by calibrating the measurement results. For example, Positioning Reference Units (PRU) with known positions are used to calibrate positioning errors such as TRP/gNB time error and/or angle error and/or reference signal received power error. How to calibrate the measurement results by UE is a problem that needs to be solved, including how to determine the calibration information, obtain the calibration information and when to receive the calibration information.

According to an aspect of the invention, there is provided a positioning signal measuring method and device. In one embodiment of the invention, a method is provided to solve the problem of calculating the duration (K) of positioning reference signal symbol when the measurement gap of the positioning reference signals is not configured or activated. In this embodiment, the PRS is used for exemplary introduction, and the introduced method can also be used for measurement of other signals.

When the PRS measurement gap is not configured or activated, the duration (K) of PRS symbol is calculated in a way that includes a combination of one or more of the followings:

When other positioning reference signal measurement windows, such as PRS processing windows, are configured or activated, for the purpose of DL PRS processing capability,, the duration K (ms) of PRS symbols within p milliseconds (ms) window is calculated as follows:

●Type 1: the duration calculation with UE symbol level buffering capability.

$$K = \sum_{s \in S} K_s$$

$$K_s = T_s^{\mathrm{end}} - T_s^{\mathrm{start}}$$

●Type 2: the duration calculation with UE slot level buffering capability.

$$K = \frac{1}{2^\mu} |S|$$

Wherein, S is the set of slots based on the numerology of the DL PRS of a serving cell within the P ms window in the positioning frequency layer that contains the (pre-) configured first resource or the first resource with high priority considering the actual nr-DL-PRS-ExpectedRSTD, nr-DL-PRS-ExpectedRSTD-Uncertainty provided for each pair of DL PRS Resource Sets.

For Type 1, $\left[ T_s^{\mathrm{start}}, T_s^{\mathrm{end}} \right]$ is the smallest gap in milliseconds within slot s corresponding to an integer number of OFDM symbols based on the numerology of the DL PRS of a serving cell that covers the union of the first resources with (pre-) configuration or high priority and determines the first resource occupancy within slot s, where the gap $\left[ T_s^{\mathrm{start}}, T_s^{\mathrm{end}} \right]$ considers the actual nr-DL-PRS-ExpectedRSTD, nr-DL-PRS-ExpectedRSTD-Uncertainty provided for each pair of DL PRS resource sets (target and reference).

For Type 2, μ is the numerology of the DL PRS, and |S| is the cardinality of the set S.

When no positioning reference signal measurement window is configured or activated, for example, in the RRC_INACTIVE/RRC_IDLE state, the priority of the PRS is lower than that of the first downlink signal, which includes but is not limited to the SSB, SIB1, CORESET0, MSG2/MSGB, paging, and DL SDT signals. At this time, no PRS measurement window such as the PRS processing window and the PRS measurement gap are introduced to measure the PRS signals. Subject to processing capability of the DL PRS, the UE determines M first resources starting from the first reference point by default and/or the way indicated by the base station, and the calculation of M is only based on the (pre) configured or high priority first resources, and M is a real number greater than 0. Preferably, M is the number of the (pre) configured or high priority PRS. The duration K (ms) of PRS symbol is calculated as follows:

● Type 1: the duration calculation with UE symbol level buffering capability.

$$K = \sum_{s \in S} K_s$$

$$K_s = T_s^{\text{end}} - T_s^{\text{start}}$$

● Type 2: the duration calculation with UE slot level buffering capability.

$$\text{i.} \quad K = \frac{1}{2^\mu} |S|$$

Wherein, S is the set of slots based on the numerology of the DL PRS of a serving cell corresponding to M first resources configured in the positioning frequency layer that contains M (pre-) configured or high priority first resources considering the actual nr-DL-PRS-ExpectedRSTD, nr-DL-PRS-ExpectedRSTD-Uncertainty provided for each pair of DL PRS Resource Sets.

For Type 1, $\left[ T_s^{\text{start}}, T_s^{\text{end}} \right]$ is the smallest gap in milliseconds within slot S corresponding to an integer number of OFDM symbols based on the numerology of the DL PRS of a serving cell that covers the union of the M first resources with (pre-) configuration or high priority and determines the first resource occupancy within slot S, where the gap $\left[ T_s^{\text{start}}, T_s^{\text{end}} \right]$ considers the actual nr-DL-PRS-ExpectedRSTD, nr-DL-PRS-ExpectedRSTD-Uncertainty provided for each pair of DL PRS resource sets (target and reference).

For Type 2, $\mu$ is the numerology of the DL PRS, and |S| is the cardinality of the set S.

The first resource with high priority may be a PRS resource that is determined to be measured within the PRS processing window subject to UE capability and/or as indicated by the base station, and/or PRS that do not collide with other downlink signals such as the first downlink signal.

The first reference point may be the system frame number SFN0 slot0 (the system frame number is slot 0 (slot0) in SFN0) and/or the PRS measurement instance and/or the (pre) configured and/or indicated PRS measurement starting position.

The first resource may be the PRS symbols and/or PRS resources and/or the PRS resource sets and/or the instance of PRS resource and/or the instance of PRS resource set, and/or the PRS measurement instance.

In another embodiment of the invention, there is provided a method for calculating the measurement period ($T_{\text{RSTD},i}$ and/or $T_{\text{UERxTx},i}$ and/or $T_{\text{PRS-RSRP},i}$, and i is the index of the positioning frequency layer) of the signal measurement in the measurement method and equipment. The method proposes how to calculate the measurement period of positioning reference signal measurement when the measurement gap is not configured or activated; to calculate the measurement period of positioning reference signal measurement according to the configuration of various positioning reference signals; and the subsequent transmission mode of positioning reference signal after receiving the end time indication. In this embodiment, the PRS is used for exemplary introduction, and the introduced method can also be used for other signals.

The measurement period of the DL PRS measurement is calculated according to the time duration of available PRS ($L_{\text{available\_PRS},i}$). When calculating the measurement period of the PRS measurement, when the measurement gap is not configured or activated, the calculation method of the time duration of available PRS $L_{\text{available\_PRS},i}$ in the positioning frequency layer i to be measured during $T_{\text{available\_PRS},i}$ (the $T_{\text{available\_PRS},i}$ is defined as the least common multiple between the periodicity of the positioning reference signal resource with muting and the repetition periodicity of the measurement gap in the positioning frequency layer i) includes the combination of one or more of the followings:

It is calculated in the same way as the duration K of PRS symbol, and will not be described here again.

When other positioning reference signal measurement windows, such as the PRS processing window, are configured or activated, only the first resource that is unmuted and fully or partially overlapped with PRS processing window and first resource with (pre-) configured or with high priority are considered. Preferably, in the RRC_INACTIVE/RRC_IDLE state, when the PRS measurement gap is not configured or activated and the PRS processing window is configured or activated, because the priority of the PRS is lower than that of the first downlink signal, the time duration of the available PRS $L_{\text{available\_PRS},i}$ only calculates PRS resources that are unmuted and fully or partially overlapped with the PRS processing window and (pre-) configured or do not collide/overlap with the first downlink signal.

When other positioning reference signal measurement windows are not configured or activated, only the first resources that are unmuted and the M (pre) configured or high priority first resources are calculated. Preferably, in the RRC_INACTIVE/RRC_IDLE state, when no positioning measurement window is configured or activated, because the priority of the PRS is lower than that of the first downlink signal, the time duration of the available PRS $L_{available\_PRS,i}$ only calculates the PRS resources that are unmuted and the M (pre) configured PRS resources or the PRS resources that do not collide/overlap with the first downlink signal.

The first resource with high priority may be a PRS resource that is determined to be measured within the PRS processing window subject to UE capability and/or as indicated by the base station, and/or PRS that do not collide with other downlink signals such as the first downlink signal.

The first reference point may be the system frame number SFN0 slot0 and/or the PRS measurement instance and/or the (pre) configured and/or indicated PRS measurement starting position.

The first resource may be the PRS symbols and/or PRS resources and/or the PRS resource sets and/or the instance of PRS resource and/or the instance of PRS resource set, and/or the PRS measurement instance.

The measurement period of DL PRS measurement is calculated according to the period of the PRS measurement($T_{effect,i}$). When calculating the period of the PRS measurement, if the measurement gap is not configured or activated, the value of the measurement gap repetition period $MGRP_i$ can be configured as a combination of one or more of the following:

The value of the measurement gap repetition period $MGRP_i$ can be configured according to the repetition period of the PRS processing window, for example, equal to the repetition period of the currently configured PRS processing window.

The value of the measurement gap repetition period $MGRP_i$ can be obtained by the Gap Pattern Id of the virtual measurement gap according to the currently configured Gap Pattern Configurations table. The virtual measurement gap means only configuring the mode index number of the measurement gap, but not configuring or activating the measurement gap.

The value of the measurement gap repetition period $MGRP_i$ in the i-th positioning frequency layer can be set to R by default and/or as indicated by the base station, and R is a real number greater than or equal to 0. R can be configured as a combination of one or more of the following:

The time gap from the start time of the first reference point to the start time of the next first reference point.

The time gap from the start time of the first reference point to the end time of the last first resource in the M first resources.

The time gap from the start time of the first one of the M first resources to the start time of the next first reference point.

The time gap from the start time of the first one of the M first resources to the end time of the last one of the M first resources.

For example, in the RRC_INACTIVE/RRC_IDLE state, if the PRS measurement gap is not configured or activated, in order to calculate the corresponding PRS measurement period, the value of the measurement gap repetition period $MGRP_i$ in the i-th positioning frequency layer can be set to 20 ms.

When more than one PRS period is configured in the positioning frequency layer i, the least common multiple of the PRS periods $T_{per}^{PRS\ with\ muting}$ in all DL PRS resource sets in the positioning frequency layer is used to derive the measurement period of the positioning frequency layer i. For example, in order to reduce the time delay in the positioning measurement process and improve the resource utilization rate, on-demand PRS is introduced to meet the positioning measurement requirements of some UE based on the existing DL PRS.

FIG. 4 is a schematic diagram showing transmission of DL PRS and on-demand PRS.

As shown in FIG. 4, When the DL PRS and the on-demand PRS exist at the same time, and DL PRS and on-demand PRS with different bandwidths and/or different periods and/or sub-carrier gaps and/or different CP types are used for position measurement, and when UE expects to receive the DL PRS and on-demand PRS at the same time, the calculation method of the measurement period of the PRS measurement includes a combination of one or more of the following:

The measurement period of the PRS measurement is calculated according to the smaller signal transmission period from the DL PRS period and the on-demand PRS period.

The measurement period of the PRS measurement is calculated according to the on-demand PRS period.

The measurement period of the PRS measurement is calculated according to the least common multiple of the DL PRS period and/or the on-demand PRS period and/or the measurement gap or the PRS processing window period.

After receiving all or part of the PRS end time indication within the measurement period of the PRS measurement and/or outside the measurement period of the PRS measurement, for example, after the on-demand PRS measurement is completed and the UE receives the on-demand PRS end time indication, the subsequent transmission mode of the PRS includes the combination of one or more of the followings:

Fallback to the previous DL PRS configuration and continuing to receive the PRS or measuring the PRS at a specific position, wherein the specific position may be the measurement gap and/or PRS processing window and/or time period for positioning reference signal measurement in the current PRS measurement period, and/or the measurement gap and/or PRS processing window and/or time period for positioning reference signal measurement in other PRS measurements periods after the ending position of the current PRS measurement period.

The UE stops receiving the PRS, and when the UE requests again or LMF initiates positioning measurement, the base station reconfigures and/or reactivates the DL PRS.

In another embodiment of the invention, there is provided a method for calibrating the measurement results in the measurement method and equipment. The UE obtains and/or determines the calibration information through the method for obtaining the calibration information and the trigger conditions for receiving the calibration information provided by the invention.

Specifically, the calibration information includes a combination of one or more of the followings:

The time difference associated with two or more TRPs/ CELL IDs and/or PRS/ sounding reference signal (SRS) resources/resource set IDs.

The angle difference associated with two or more TRPs/ CELL IDs and/or PRS/SRS resources/resource set IDs.

The method for obtaining calibration information comprises the combination of one or more of the followings:

The UE obtains the calibration information indication through the RRC message and/or the MAC CE message, for example, the UE periodically obtains the calibration information indication without requesting the base station equipment;

The UE requests calibration information from the base station equipment (such as gNB and/or LMF and/or TRP), and then obtains the calibration information indication through the RRC message and/or the MAC CE and/or the LPP(LTE Positioning Protocol) message, wherein the LPP message is sent to the UE by the LMF. Because the LMF can obtain all the information of the serving cell and the non-serving cell, the calibration information determined by LMF is more accurate.

The UE triggers/expects to receive the calibration information when the trigger condition for receiving the calibration information is met. Trigger conditions for receiving calibration information include the combination of one or more of the followings:

The UE detects that the configured TRP/CELL ID is the same as the TRP/ CELL ID of the PRU used to provide positioning calibration information indicated by the base station equipment.

The UE receives the calibration status indication message as "on". For example, the base station equipment indicates through the calibration status (such as "on" for calibration information or new calibration information; "off" for no calibration information or no new calibration information, and the latest received calibration information will be used, or the calibration information will not be used or stopped).

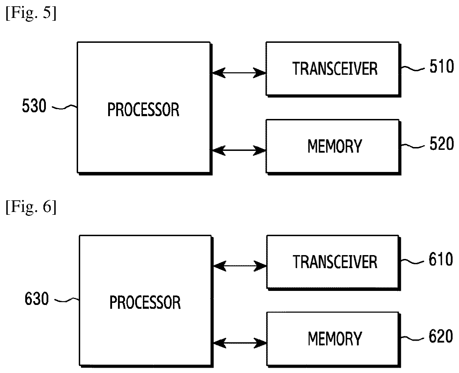

FIG. 5 illustrates various hardware components of a user equipment, according to the embodiments as disclosed herein.

As shown in FIG. 5, the UE according to an embodiment may include a transceiver 510, a memory 520, and a processor 530. The transceiver 510, the memory 520, and the processor 530 of the UE may operate according to a communication method of the UE described above. However, the components of the UE are not limited thereto. wherein computer-executable instructions are stored in the memory 520, and when the instructions are executed by the processor 530, at least one method corresponding to the above embodiments of the disclosure is executed. For example, the UE may include more or fewer components than those described above. In addition, the processor 530, the transceiver 510, and the memory 520 may be implemented as a single chip. Also, the processor 530 may include at least one processor. Furthermore, the UE of FIG. 5 corresponds to the UE 116 of the FIG. 3A.

The transceiver 510 collectively refers to a UE receiver and a UE transmitter, and may transmit/receive a signal to/from a base station or a network entity. The signal transmitted or received to or from the base station or a network entity may include control information and data. The transceiver 510 may include a RF transmitter for up-converting and amplifying a frequency of a transmitted signal, and a RF receiver for amplifying low-noise and down-converting a frequency of a received signal. However, this is only an example of the transceiver 510 and components of the transceiver 510 are not limited to the RF transmitter and the RF receiver.

Also, the transceiver 510 may receive and output, to the processor 530, a signal through a wireless channel, and transmit a signal output from the processor 530 through the wireless channel.

The memory 520 may store a program and data required for operations of the UE. Also, the memory 520 may store control information or data included in a signal obtained by the UE. The memory 520 may be a storage medium, such as read-only memory (ROM), random access memory (RAM), a hard disk, a CD-ROM, and a DVD, or a combination of storage media.

The processor 530 may control a series of processes such that the UE operates as described above. For example, the transceiver 510 may receive a data signal including a control signal transmitted by the base station or the network entity, and the processor 530 may determine a result of receiving the control signal and the data signal transmitted by the base station or the network entity.

According to the embodiment of the invention, the UE receives the configuration information of the signal when the measurement gap of the positioning reference signal is not configured or activated; determines the signal for measurement according to the received configuration information; and measures the determined signal. Wherein the determination of the signal for measurement according to the received configuration information comprises: calculating a first time, wherein the first time comprises at least one of the following: 1) the duration K of positioning reference signal symbol; 2) the duration of available positioning reference signal; 3) the measurement period of the positioning reference signal measurement. The configuration information of the received signal includes: obtaining and/or determining calibration information, wherein the calibration information includes a combination of one or more of the followings: 1) the time difference associated with two or more transmitting and receiving point (TRP)/ CELL IDs and/or positioning reference signal/sounding reference signal (SRS) resources/resource set IDs; 2) the angle difference associated with two or more transmitting and receiving point (TRP)/ CELL IDs and/or positioning reference signal/sounding reference signal (SRS) resources/resource set IDs.

FIG. 6 illustrates a structure of a base station according to an embodiment of the disclosure.

As shown in FIG. 6, the base station according to an embodiment may include a transceiver 610, a memory 620, and a processor 630. The transceiver 610, the memory 620, and the processor 630 of the base station may operate according to a communication method of the base station described above. However, the components of the base station are not limited thereto. For example, the base station may include more or fewer components than those described above. In addition, the processor 630, the transceiver 610, and the memory 620 may be implemented as a single chip. Also, the processor 630 may include at least one processor. Furthermore, the base station of FIG. 6 corresponds to the BS 102 of the FIG. 3B.

The transceiver 610 collectively refers to a base station receiver and a base station transmitter, and may transmit/receive a signal to/from a terminal(UE) or a network entity. The signal transmitted or received to or from the terminal or a network entity may include control information and data. The transceiver 610 may include a RF transmitter for up-converting and amplifying a frequency of a transmitted signal, and a RF receiver for amplifying low-noise and down-converting a frequency of a received signal. However, this is only an example of the transceiver 610 and components of the transceiver 610 are not limited to the RF transmitter and the RF receiver.

Also, the transceiver 610 may receive and output, to the processor 630, a signal through a wireless channel, and transmit a signal output from the processor 630 through the wireless channel.

The memory 620 may store a program and data required for operations of the base station. Also, the memory 620 may store control information or data included in a signal obtained by the base station. The memory 620 may be a storage medium, such as read-only memory (ROM), random access memory (RAM), a hard disk, a CD-ROM, and a DVD, or a combination of storage media.

The processor 630 may control a series of processes such that the base station operates as described above. For example, the transceiver 610 may receive a data signal including a control signal transmitted by the terminal, and the processor 630 may determine a result of receiving the control signal and the data signal transmitted by the terminal.

In one embodiment, a method performed by a user equipment (UE) for positioning reference signal (PRS) measurement in a wireless communication system, the method comprising: identifying a first resource for the PRS measurement in a PRS processing window (PPW) without measurement gaps; and performing the PRS measurement for the first resource, wherein the first resource is unmuted and at least partially overlapped with the PPW.

In one embodiment, wherein the first resource further includes at least one condition, wherein the at least one condition is that the first resource is pre-configured or does not overlap with at least one of other signals or channels of higher priority.

In one embodiment, wherein the PPW is configured based on radio resource control (RRC) signaling.

In one embodiment, wherein the first resource is for at least one of RSTD, PRS-RSRP, or UE Rx - Tx time difference.

In one embodiment, a method performed by a base station for positioning reference signal (PRS) measurement in a wireless communication system, the method comprising: transmitting, to a user equipment (UE), a first resource for the PRS measurement in a PRS processing window (PPW) without measurement gaps, wherein the first resource is unmuted and at least partially overlapped with the PPW.

In one embodiment, wherein the first resource further includes at least one condition, wherein the at least one condition is that the first resource is pre-configured or does not overlap with at least one of other signals or channels of higher priority.

In one embodiment, wherein the PPW is configured based on radio resource control (RRC) signaling.

In one embodiment, wherein the first resource is for at least one of RSTD, PRS-RSRP, or UE Rx - Tx time difference.

In one embodiment, a user equipment (UE) for positioning reference signal (PRS) measurement in a wireless communication system, the UE comprising: a transceiver; and at least one processor operatively coupled with the transceiver and configured to: identify a first resource for the PRS measurement in a PRS processing window (PPW) without measurement gaps; and perform the PRS measurement for the first resource, wherein the first resource is unmuted and at least partially overlapped with the PPW.

In one embodiment, wherein the first resource further includes at least one condition, wherein the at least one condition is that the first resource is pre-configured or does not overlap with at least one of other signals or channels of higher priority.

In one embodiment, wherein the PPW is configured based on radio resource control (RRC) signaling.

In one embodiment, wherein the first resource is for at least one of RSTD, PRS-RSRP, or UE Rx - Tx time difference.

In one embodiment, a base station for positioning reference signal (PRS) measurement in a wireless communication system, the base station comprising: a transceiver; and at least one processor operatively coupled with the transceiver and configured to: transmit, to a user equipment (UE), a first resource for the PRS measurement in a PRS processing window (PPW) without measurement gaps, wherein the first resource is unmuted and at least partially overlapped with the PPW.

In one embodiment, wherein the first resource further includes at least one condition, wherein the at least one condition is that the first resource is pre-configured or does not overlap with at least one of other signals or channels of higher priority.

In one embodiment, wherein the first resource is for at least one of RSTD, PRS-RSRP, or UE Rx - Tx time difference.

The above embodiments are only the preferred embodiments of the invention, and it is not intended to limit the invention. Any modifications, equivalents, improvements, etc. made within the spirit and principle of the invention should be included in the scope of the invention.

Those skilled in the art will understand that the various illustrative logical blocks, modules, circuits, and steps described in this application may be implemented as hardware, software, or a combination of both. To clearly illustrate this interchangeability between hardware and software, various illustrative components, blocks, modules, circuits, and steps are generally described above in the form of their functional sets. Whether such function sets are implemented as hardware or software depends on the specific application and the design constraints imposed on the overall system. Technicians may implement the described functional sets in different ways for each specific application, but such design decisions should not be interpreted as causing a departure from the scope of this application.

In the above-described embodiments of the disclosure, all operations and messages may be selectively performed or may be omitted. In addition, the operations in each embodiment do not need to be performed sequentially, and the order of operations may vary. Messages do not need to be transmitted in order, and the transmission order of messages may change. Each operation and transfer of each message can be performed independently.

Although the figures illustrate different examples of user equipment, various changes may be made to the figures. For example, the user equipment can include any number of each component in any suitable arrangement. In general, the figures do not limit the scope of this disclosure to any particular configuration(s). Moreover, while figures illustrate operational environments in which various user equipment features disclosed in this patent document can be used, these features can be used in any other suitable system.

It can be understood by those skilled in the art that the invention includes devices for performing one or more of the operations described in this application. These devices can be specially designed and manufactured for the required purposes, or they can also include known devices in general-purpose computers. These devices have stored therein computer programs that are selectively activated or reconfigured. Such a computer program can be stored in a device (e.g., computer) readable medium or in any type of medium suitable for storing electronic instructions and respectively coupled to a bus, including but not limited to any type of disk (including floppy disk, hard disk, optical disk, CD-ROM, and magneto-optical disk), ROM(Read-Only Memory), RAM(Random Access Memory), EPROM (erasable programmable read-only memory), EEPROM (electrically erasable programmable read-only memory), flash memory, magnetic card or optical card. That is, a readable medium includes any medium that stores or transmits information in a readable form by a device (e.g., a computer).

In one or more designs, the functions may be implemented in hardware, software, firmware, or any combination thereof. If implemented in software, each function may be stored as one or more pieces of instructions or codes on a computer-readable medium or delivered through it. The computer-readable medium includes both a computer storage medium and a communication medium, the latter including any medium that facilitates the transfer of computer programs from one place to another. The storage medium may be any available medium that can be accessed by a general purpose or special purpose computer. [0100] It can be understood by those skilled in the art that each block in these structural diagrams and/or block diagrams and/or flow diagrams and combinations of blocks in these structural diagrams and/or block diagrams and/or flow diagrams can be implemented by computer program instructions. Those skilled in the art can understand that these computer program instructions can be provided to a processor of a general-purpose computer, a professional computer or other programmable data processing methods for implementation, so that the scheme specified in the block or blocks of the structure diagram and/or block diagram and/or flow diagram disclosed by the invention can be executed by the processor of the computer or other programmable data processing methods.

Those skilled in the art can understand that the steps, measures and schemes in various operations, methods and processes already discussed in the invention can be alternated, changed, combined or deleted. Furthermore, other steps, measures and schemes having the various operations, methods and processes already discussed in the invention can also be alternated, changed, rearranged, decomposed, combined or deleted. Furthermore, the steps, measures and schemes in various operations, methods and processes disclosed in the prior art can also be alternated, changed, rearranged, decomposed, combined or deleted.

The above is only a partial embodiment of the invention. It should be pointed out that for those skilled in the art, without departing from the principle of the invention, several improvements and embellishments can be made, which should also be regarded as the protection scope of the invention.

In addition to the foregoing explanations, the following enumerated Aspects 1 to 15 are also relevant for the present disclosure as part of the specification which must not be confused with the appended claims (that follow after the specification):

Aspect 1: A method performed by a user equipment (UE) for positioning reference signal (PRS) measurement in a wireless communication system, the method comprising: identifying a first resource for the PRS measurement in a PRS processing window (PPW) without measurement gaps; and performing the PRS measurement for the first resource, wherein the first resource is unmuted and at least partially overlapped with the PPW.

Aspect 2: The method of Aspect 1, wherein the first resource further includes at least one condition, wherein the at least one condition is that the first resource is pre-configured or does not overlap with at least one of other signals or channels of higher priority.

Aspect 3: The method of Aspect 1, wherein the PPW is configured based on radio resource control (RRC) signaling.

Aspect 4: The method of Aspect 1, wherein the first resource is for at least one of RSTD, PRS-RSRP, or UE Rx - Tx time difference.

Aspect 5: A method performed by a base station for positioning reference signal (PRS) measurement in a wireless communication system, the method comprising: transmitting, to a user equipment (UE), a first resource for the PRS measurement in a PRS processing window (PPW) without measurement gaps, wherein the first resource is unmuted and at least partially overlapped with the PPW.

Aspect 6: The method of Aspect 5, wherein the first resource further includes at least one condition, wherein the at least one condition is that the first resource is pre-configured or does not overlap with at least one of other signals or channels of higher priority.

Aspect 7: The method of Aspect 5, wherein the PPW is configured based on radio resource control (RRC) signaling.

Aspect 8: The method of Aspect 5, wherein the first resource is for at least one of RSTD, PRS-RSRP, or UE Rx - Tx time difference.

Aspect 9: A user equipment (UE) for positioning reference signal (PRS) measurement in a wireless communication system, the UE comprising: a transceiver; and at least one processor operatively coupled with the transceiver and configured to: identify a first resource for the PRS measurement in a PRS processing window (PPW) without measurement gaps; and perform the PRS measurement for the first resource, wherein the first resource is unmuted and at least partially overlapped with the PPW.

Aspect 10: The UE of Aspect 9, wherein the first resource further includes at least one condition, wherein the at least one condition is that the first resource is pre-configured or does not overlap with at least one of other signals or channels of higher priority.

Aspect 11: The method of Aspect 9, wherein the PPW is configured based on radio resource control (RRC) signaling.

Aspect 12: The method of Aspect 9, wherein the first resource is for at least one of RSTD, PRS-RSRP, or UE Rx - Tx time difference.

Aspect 13: A base station for positioning reference signal (PRS) measurement in a wireless communication system, the base station comprising: a transceiver; and at least one processor operatively coupled with the transceiver and configured to: transmit, to a user equipment (UE), a first resource for the PRS measurement in a PRS processing window (PPW) without measurement gaps, wherein the first resource is unmuted and at least partially overlapped with the PPW.

Aspect 14: The method of Aspect 13, wherein the first resource further includes at least one condition, wherein the at least one condition is that the first resource is pre-configured or does not overlap with at least one of other signals or channels of higher priority.

Aspect 15: The method of Aspect 13, wherein the first resource is for at least one of RSTD, PRS-RSRP, or UE Rx - Tx time difference.

**Claims**

1. A method performed by a user equipment, UE, in a wireless communication system, the method comprising:

   identifying a time duration of an available positioning reference signal, PRS, resource; and
   performing a PRS measurement within a measurement period based on the time duration of the available PRS resource,
   wherein a PRS resource for the PRS measurement is unmuted and does not overlap with at least one of other signals or channels of higher

**2.** The method of claim 1,
wherein the PRS resource for the PRS measurement is at least partially overlapped with a PRS processing window, PPW, without measurement gaps.

**3.** The method of claim 1,
wherein the UE is in a radio resource control, RRC, inactive state.

**4.** The method of claim 1,
wherein the available PRS resource is for at least one of PRS reference signal received power, PRS-RSRP, or UE Rx - Tx time difference.

**5.** A method performed by a base station in a wireless communication system, the method comprising:

transmitting, to a user equipment, UE, a positioning reference signal, PRS, on a PRS resource for the PRS measurement,
wherein the PRS resource for the PRS measurement is unmuted and does not overlap with at least one of other signals or channels of higher priority.

**6.** The method of claim 5,
wherein the PRS resource for the PRS measurement is at least partially overlapped with a PRS processing window, PPW, without measurement gaps.

**7.** The method of claim 5,
wherein the UE is in a radio resource control, RRC, inactive state.

**8.** The method of claim 5,
wherein the available PRS resource is for at least one of PRS reference signal received power, PRS-RSRP, or UE Rx - Tx time difference.

**9.** A user equipment, UE, comprising:

at least one transceiver;
at least one processor communicatively coupled to the at least one transceiver; and
at least one memory, communicatively coupled to the at least one processor, storing instructions executable by the at least one processor individually or in any combination to cause the UE to:

identify a time duration of an available positioning reference signal, PRS, resource, and
perform a PRS measurement within a measurement period based on the time duration of the available PRS resource,

wherein a PRS resource for the PRS measurement is unmuted and does not overlap with at least one of other signals or channels of higher priority.

**10.** The UE of claim 9,
wherein the PRS resource for the PRS measurement is at least partially overlapped with a PRS processing window, PPW, without measurement gaps.

**11.** The UE of claim 9,
wherein the UE is in a radio resource control, RRC, inactive state.

**12.** The UE of claim 9,
wherein the available PRS resource is for at least one of PRS reference signal received power, PRS-RSRP, or UE Rx - Tx time difference.

**13.** A base station comprising:

at least one transceiver;
at least one processor communicatively coupled to the at least one transceiver; and
at least one memory, communicatively coupled to the at least one processor, storing instructions executable by the at least one processor individually or in any combination to cause the base station to:
transmit, to a user equipment, UE, a positioning reference signal, PRS, on a PRS resource for the PRS measurement,
wherein the PRS resource for the PRS measurement is unmuted and does not overlap with at least one of other signals or channels of higher priority.

**14.** The base station of claim 13,
wherein the PRS resource for the PRS measurement is at least partially overlapped with a PRS processing window, PPW, without measurement gaps.

**15.** The base station of claim 13,
wherein the UE is in a radio resource control, RRC, inactive state.

[Fig. 1]

[Fig. 2A]

EP 4 741 867 A2

[Fig. 2B]

EP 4 741 867 A2

21

[Fig. 3A]

[Fig. 3B]

[Fig. 4]

[Fig. 5]

[Fig. 6]